# EUROPÄISCHE PATENTANMELDUNG

(11) **EP 3 738 991 A1**
(43) Veröffentlichungstag der Anmeldung: **18.11.2020**
(21) Anmeldenummer: 19175091.8
(22) Anmeldetag: 17.05.2019
(51) Int. Cl.: C08G 18/28, B08B 7/00, C08G 18/42, C08G 18/48, C08G 18/76, C09J 175/06

(54) **VERFAHREN ZUM LÖSEN VON KLEBSTOFFEN**

(71) Anmelder: Evonik Operations GmbH, 45128 Essen (DE)
(72) Erfinder: KOLB, Nicolai, 45665 Recklinghausen (DE); ALTENBUCHNER, Peter, 48155 Münster (DE); BRENNER, Gabriele, 48249 Dülmen (DE); SCHLEIMER, Bernhard, 45770 Marl (DE)
(74) Vertreter: Evonik Patent Association

(57) **Zusammenfassung**

Die vorliegende Erfindung betrifft ein Verfahren bei dem eine Verklebung mit einem überkritischen Fluid in Kontakt gebracht wird, dadurch gekennzeichnet, dass die Verklebung auf einem oder mehreren Klebstoffen basiert, die vernetzte Polymere aufweisen, wobei die vernetzten Polymere mindestens ein Sauerstoffatom in der Polymerkette aufweisen und über Urethanbrücken oder -O-CH₂-CH(OH)-CH₂-O-Brücken oder entsprechende Brücken aufweisende Molekülketten vernetzt sind, und dass nach dem in Kontakt bringen der Verklebung mit dem überkritischen Fluid mindestens einer der Parameter Druck, Volumen, Stoffmenge oder Temperatur so geändert wird, dass das Fluid vom überkritischen Zustand in einen anderen Zustand übergeht, sowie der Einsatz dieses Verfahrens als zumindest einen Teilschritt in einem Verfahren zur Lösung von Verklebungen von Bauteilen.

## Beschreibung

Die vorliegende Erfindung betrifft ein Verfahren bei dem eine Verklebung mit einem überkritischen Fluid in Kontakt gebracht wird, dadurch gekennzeichnet, dass die Verklebung auf einem oder mehreren Klebstoffen basiert, die vernetzte Polymere aufweisen, wobei die vernetzten Polymere mindestens ein Sauerstoffatom in der Polymerkette aufweisen, und die vernetzen Polymere über Urethanbrücken oder - O-CH₂-CH(OH)-CH₂-O-Brücken oder entsprechende Brücken aufweisende Molekülketten vernetzt sind, und dass nach dem in Kontakt bringen der Verklebung mit dem überkritischen Fluid mindestens einer der Parameter Druck, Volumen, Stoffmenge oder Temperatur so geändert wird, dass das Fluid vom überkritischen Zustand in einen anderen Zustand übergeht, sowie der Einsatz dieses Verfahrens als zumindest einen Teilschritt in einem Verfahren zur Lösung von Verklebungen von Bauteilen.

Chemisch reaktive Klebstoffe, wie z.B. Polyurethanklebstoffe - sowohl feuchtigkeitshärtende 1-Komponenten als auch 2-Komponenten Klebstoffe - werden in vielen industriellen Verfahren genutzt, wo besonders hohe Anforderungen an die Verklebung gestellt werden. Insbesondere bzgl. der thermischen Stabilität (Wärmestandfestigkeit) zeigen Polyurethanklebstoffe hervorragende Eigenschaften.

Eine aktuelle legislative Vorgabe ist allerdings, dass geklebte Produkte nach dem Lebenszyklus wieder recycelt werden oder für Reparaturzwecke, ohne gravierende Beschädigung der Bauteile, getrennt werden können - beispielsweise elektronische Geräte wie Mobiltelefone oder Displays. Für ein solches Recycling oder Trennen müsste der Klebstoff "auf Befehl" lösbar sein (De-Bonding on Demand, abgekürzt DBD).

Ein üblicher Ansatz für De-Bonding on Demand ist der Eintrag von Temperatur, wodurch die Adhäsion und/oder die Kohäsion beeinflusst werden. Hier gibt es diverse Ansätze, beispielsweise das Zufügen eines nicht-reaktiv eingebauten Harzes in die Klebstoffformulierung, welches bei Temperaturen über dem Erweichungspunkt den Klebstoff "aufweicht" und entsprechend die Kohäsion verringert (WO2016/000222). Dieser Ansatz ist allerdings nachteilig, da die nicht-reaktiv eingebauten Polymere üblicherweise zu einer geringeren Kohäsion des Klebstoffs auch bei niedrigeren Temperaturen führen.

Überkritische Fluide (manchmal auch Superkritische Fluide genannt), insbesondere überkritisches CO₂, sind in der Literatur wohlbekannt und vereinen die Eigenschaften von Flüssigkeit und Gas. Genauer gesagt handelt es sich um raumfüllende Flüssigkeiten mit der Viskosität von Gasen, welche gute Diffusionseigenschaften aufweisen.

Die Verwendung von überkritischem CO₂ ist für zahlreiche Anwendungen beschrieben. So wird beispielsweise die Reinigung von metallischen Substraten, welche an der Oberfläche mit Farben oder Anhaftungen verunreinigt sind, mittels Extraktion durch überkritisches CO₂ beschrieben (WO 2006095371 A1). Ein ähnliches Extraktions- bzw. Reinigungsverfahren ist ebenfalls für Papier beschrieben (EP 480476 A1).

Darüber hinaus ist bekannt, wie thermoplastische Kunststoffe, wie beispielsweise thermoplastisches Polyurethan (TPU), durch die Behandlung mit überkritischem CO₂ geschäumt werden können (US 20170259473 A1).

Dieses Verfahren zum Schäumen wurde auch für Haftklebstoffe untersucht. Dabei wurden Acryl-Polymere durch die Behandlung mit überkritischem CO₂ oberflächenmodifiziert, um eine verbesserte Klebkraft zu erhalten (EP 1008637 A2).

Weiterhin wurde gezeigt, dass durch thermoplastische, nicht-reaktive Verklebungen verklebte Bauteile mit überkritischem CO₂ wieder entklebt werden können, in dem der Klebstoff durch das überkritische CO₂ gelöst und ausgewaschen wird (WO 9826886 A1). Solche thermoplastischen Verklebungen sind im Vergleich zu den oben erwähnten, stark vernetzten Reaktivklebstoffen allerdings mechanisch weniger stabil und entsprechend negativ bzgl. der Kohäsion und Langlebigkeit, was deren industriellen Einsatz deutlich limitiert.

Es bestand also weiterhin die Aufgabe ein Verfahren zu entwickeln, welches es erlaubt, geklebte Teile zerstörungsfrei zu entkleben, wobei der Klebstoff vor dem Entkleben keine Einbußen in der mechanischen oder adhäsiven Performance aufzeigen soll.

Überraschenderweise wurde gefunden, dass diese Aufgabe dadurch gelöst werden kann, wenn der Klebstoff bzw. die Verklebung mit einem überkritischen Fluid behandelt wird. Im Rahmen der vorliegenden Erfindung wurde überraschenderweise außerdem gefunden, dass auch (stark) vernetzte Reaktivklebstoffe, insbesondere Polyurethanklebstoffe, durch die Behandlung mit überkritischem CO₂ dermaßen beeinflusst werden können, dass diese ihre Klebkraft soweit verlieren, dass ein zerstörungsfreies Lösen der geklebten Teile möglich ist. Überraschenderweise funktioniert dies sogar in einer Klebefuge, wo der Klebstoff für das superkritische Fluid nur sehr schwer zugänglich ist.

Gegenstand der vorliegenden Erfindung ist deshalb ein Verfahren bei dem eine Verklebung mit einem überkritischen Fluid in Kontakt gebracht wird, dadurch gekennzeichnet, dass die Verklebung auf einem oder mehreren Klebstoffen basiert, die vernetzte Polymere aufweisen, wobei die vernetzten Polymere mindestens ein Sauerstoffatom in der Polymerkette aufweisen und die vernetzen Polymere über Urethanbrücken oder -O-CH₂-CH(OH)-CH₂-O-Brücken oder entsprechende Brücken aufweisende Molekülketten vernetzt sind, und dass nach dem in Kontakt bringen der Verklebung mit dem überkritischen Fluid mindestens einer der Parameter Druck, Volumen, Stoffmenge oder Temperatur so geändert wird, dass das Fluid vom überkritischen Zustand in einen anderen Zustand übergeht, wie es in den Ansprüchen beansprucht wird.

Ebenfalls Gegenstand der vorliegenden Erfindung ist der Einsatz dieses erfindungsgemäßen Verfahrens als zumindest einen Teilschritt in einem Verfahren zur Lösung von Verklebungen von Bauteilen.

Das erfindungsgemäße Verfahren hat den Vorteil, dass durch den Übergang des überkritischen Fluids in den gasförmigen oder flüssigen Zustand die Verklebung bzw. der Klebstoff so stark geschäumt wird, dass die Klebkraft ausreichend abnimmt, um die Bauteile - vorzugsweise zerstörungsfrei - voneinander lösen zu können.

Durch das erfindungsgemäße Verfahren können die Zugscherkräfte die ausgebracht werden müssen, um eine Verklebung zu lösen, vorzugsweise um mindestens 50 % reduziert werden.

Ein weiterer Vorteil des erfindungsgemäßen Verfahrens besteht darin, dass übliche Klebstoffzusammensetzungen verwendet werden können, sodass die industriellen Voraussetzungen bezüglich mechanischer Beanspruchbarkeit und Langlebigkeit der Verklebungen nicht beeinflusst werden.

Das erfindungsgemäße Verfahren und die erfindungsgemäße Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte, z.B. Molmassen-Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Das erfindungsgemäße Verfahren bei dem eine Verklebung mit einem überkritischen Fluid in Kontakt gebracht wird, zeichnet sich dadurch aus, dass die Verklebung auf einem oder mehreren Klebstoffen basiert, die vernetzte Polymere aufweisen, wobei die vernetzten Polymere mindestens ein Sauerstoffatom in der Polymerkette aufweisen und die vernetzen Polymere über Urethanbrücken oder -O-CH₂-CH(OH)-CH₂-O-Brücken oder entsprechende Brücken aufweisende Molekülketten vernetzt sind, und dass nach dem in Kontakt bringen der Verklebung mit dem überkritischen Fluid mindestens einer der Parameter Druck, Volumen, Stoffmenge oder Temperatur so geändert wird, dass das Fluid vom überkritischen Zustand in einen anderen Zustand übergeht. Vorzugsweise geht das überkritische Fluid vorzugsweise vom überkritischen Zustand in den gasförmigen Zustand über.

Unter Verklebungen werden im Rahmen der vorliegenden Erfindung solche verstanden, die mindestens zwei Bauteile miteinander verkleben. Die Verklebungen können dabei flächig oder auf Stoß ausgeführt sein.

Als Klebstoffe die vernetzte Polymere aufweisen, werden im Rahmen der vorliegenden Erfindung solche Klebstoffe verstanden, die nach dem physikalischen Klebstoffauftrag über eine anschließende chemische Folgereaktion, entweder mit der Umwelt (beispielsweise Luftfeuchtigkeit bei Reaktivklebstoffen) oder mit sich selbst (beispielsweise 2-Komponenten-Polyurethan- oder Epoxydklebstoff) eine chemische Reaktion eingehen. So können die Klebstoffe z. B. feuchtigkeits- oder strahlenhärtbare oder thermisch-vernetzende Klebstoffe, vorzugsweise Polyurethanklebstoffe sein. Üblicherweise sind solche vernetzten Klebstoffe nach vollständiger Aushärtung/Reaktion nicht mehr löslich oder aufschmelzbar und weisen eine deutlich höhere Kohäsion als nicht-reaktive Klebstoffe auf.

In dem erfindungsgemäße Verfahren ist das überkritische Fluid vorzugsweise überkritisches Kohlendioxid.

Die vernetzten Polymere basieren vorzugsweise auf Polyester- und/oder Polyether-Polyolen, bevorzugt Polyester-Polyolen.

Die Polyether-Polyole können alle bekannten Polyether-Polyole sein, bevorzugt handelt es sich um Polyethylenglykol, Polypropylenglykol oder Copolymere aus Ethylenglykol und Propylenglykol, wobei die Verteilung der Monomere sowohl statistisch als auch blockweise erfolgen kann.

Die Polyester-Polyole können alle bekannten Polyester-Polyole sein. Bevorzugte Verklebungen basieren zumindest zum Teil auf amorphen Polymeren, bevorzugt amorphen Polyester-Polyolen. Amorphe Polymere zeichnen sich dadurch aus, dass für diese Polymere kein Schmelzpeak im DSC nachweisbar ist. DSC steht dabei für Dynamische Differenzkalorimetrie, die in Anlehnung an die DSC-Methode DIN 53765 unter Verwendung einer Heizrate von 10 K/min durchgeführt wird. Amorphe Polymere weisen dementsprechend keine Schmelztemperatur, sondern nur eine Glasübergangstemperatur auf. In Abhängigkeit von der Glasübergangstemperatur liegen die amorphen Polymere bei Raumtemperatur entweder in flüssiger oder fester, glasartiger Form vor.

Es kann besonders vorteilhaft sein, wenn die vernetzten Polymere auf Polyester-Polyolen, insbesondere amorphen Polyester-Polyolen basieren, die eine OHZ, bestimmt nach DIN 53240-2, von kleiner 30 mg KOH/g, bevorzugt von 1 bis 25 mg KOH/g aufweisen, insbesondere weil diese vernetzten Polymere stärker aufgeschäumt werden können.

Als Polyester-Polyole werden vorzugsweise solche mit einer Funktionalität von mindestens 1, vorzugsweise 1 bis 100, bevorzugt 1,5 bis 20 und besonders bevorzugt 2,0 bis 10 eingesetzt, die vorzugsweise mindestens ein Di- oder Polyol und mindestens eine Di- oder Polycarbonsäure enthalten. Im Hinblick auf die Polyole und Polycarbonsäuren gibt es grundsätzlich keine Einschränkungen und es können grundsätzlich alle Mischungsverhältnisse auftreten. Die Auswahl richtet sich nach den gewünschten physikalischen Eigenschaften des Polyesters. Diese können bei Raumtemperatur fest und amorph, flüssig und amorph oder/und (teil-)kristallin sein.

Unter Polycarbonsäuren sind Verbindungen zu verstehen, die mehr als eine und bevorzugt zwei oder mehr Carboxylgruppen tragen. Unter Carboxyfunktionalitäten werden im Sinne der vorliegenden Erfindung auch deren Derivate, beispielsweise Ester oder Anhydride, verstanden.

Bei den Polycarbonsäuren kann es sich vorzugsweise um aromatische oder um gesättigte oder ungesättigte aliphatische oder gesättigte oder ungesättigte cycloaliphatische Di- oder Polycarbonsäuren handeln. Bevorzugt werden Dicarbonsäuren eingesetzt. Beispiele für geeignete aromatische Di- oder Polycarbonsäuren und deren Derivate sind Verbindungen wie Dimethylterephthalat, Terephthalsäure, Isophthalsäure, Naphthalindicarbonsäure und Phthalsäureanhydrid. Beispiele linearer aliphatischer Di- oder Polycarbonsäuren umfassen Oxalsäure, Dimethyloxalat, Malonsäure, Dimethylmalonat, Bernsteinsäure, Dimethylsuccinat, Glutarsäure, Dimethylglutarat, 3,3-Dimethylglutarsäure, Adipinsäure, Adipinsäuredimethylester, Pimelinsäure, Korksäure, Azelainsäure, Dimethylazelat, Sebacinsäure, Dimethylsebacat, Undecandicarbonsäure, 1,10-Decandicarbonsäure, 1,12-Dodecandicarbonsäure, Brassylsäure, 1,14-Tetradecandicarbonsäure, 1,16-Hexadecandisäure, 1,18-Octadecandisäure, Dimerfettsäuren und Mischungen daraus. Beispiele ungesättigter linearer Di- und/oder Polycarbonsäuren umfassen Itaconsäure, Fumarsäure, Maleinsäure oder Maleinsäureanhydrid. Beispiele gesättigter cycloaliphatischer Di- und/oder Polycarbonsäuren umfassen Derivate von 1,4-Cyclohexandicarbonsäuren, 1,3-Cyclohexandicarbonsäuren und 1,2-Cyclohexandicarbonsäuren.

Die Art der für die Herstellung der Polyester eingesetzten Polyole ist an sich beliebig. Unter Polyolen sind Verbindungen zu verstehen, die mehr als eine und bevorzugt zwei oder mehr Hydroxylgruppen tragen. So können lineare oder verzweigte aliphatische und/oder cycloaliphatische und/oder aromatische Polyole enthalten sein.

Beispiele für geeignete Diole oder Polyole sind Ethylenglykol, Propandiol-1,2, Propandiol-1,3, Butandiol-1,4, Butandiol-1,3, Butandiol-1,2, Butandiol-2,3, Pentandiol-1,5, Hexandiol-1,6, Octandiol-1,8, Nonandiol-1,9, Dodecandiol-1,12, Neopentylglykol, Butylethylpropandiol-1,3, Methylpropandiol-1,3, Methylpentandiole, Cyclohexandimethanole, Tricylclo-[2.2.1]-decandimethanol, Isomere des Limonendimethanols, Isosorbit, Trimethylolpropan, Glycerin, 1,2,6-Hexantriol, Pentaerythrol, Polyethylenglykol, Polypropylenglykol und Mischungen daraus.

Unter aromatischen Diolen oder Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Diole oder Polyole können auch Etherdiole, d. h. Oligomere bzw. Polymere, z. B. auf Basis Ethylenglykol, Propylenglykol oder Butandiol-1,4 enthalten sein.

Auch Polyole oder Polycarbonsäuren mit mehr als zwei funktionellen Gruppen, wie beispielsweise Trimellitsäureanhydrid, Trimethylolpropan, Pentaerythrol oder Glycerin können eingesetzt werden. Außerdem können Lactone und Hydroxycarbonsäuren als Bestandteile des Polyesters verwendet werden. Bevorzugt werden bifunktionelle Diole und Dicarbonsäuren eingesetzt.

Die Synthese der bevorzugten Polyesterpolyole kann bevorzugt über eine Schmelzekondensation erfolgen. Hierzu werden die vorab genannten Di- oder Polycarbonsäuren und Di- oder Polyole im Äquivalentverhältnis von Hydroxyl- zu Carboxylgruppen von 0.5 bis 1.5, bevorzugt 1.0 bis 1.3, vorgelegt und aufgeschmolzen. Die Polykondensation erfolgt bevorzugt in der Schmelze bei Temperaturen zwischen 150 und 280 °C innerhalb von 3 bis 30 Stunden. Dabei wird vorzugsweise zunächst ein Großteil der freiwerdenden Wassermenge bei Normaldruck abdestilliert. Im weiteren Verlauf werden vorzugsweise das übrige Reaktionswasser sowie leicht flüchtige Diole abgespalten, bis das angestrebte Molekulargewicht erreicht ist. Gegebenenfalls kann dies durch verminderten Druck, eine Vergrößerung der Oberfläche oder durch Durchleiten eines inerten Gasstroms erleichtert werden. Die Reaktion kann zusätzlich durch Zugabe eines Schleppmittels und/oder eines Katalysators vor oder während der Reaktion beschleunigt werden. Geeignete Schleppmittel sind beispielsweise Toluol und Xylole. Geeignete Katalysatoren sind z.B. Organotitan- oder - zinnverbindungen wie Tetrabutyltitanat oder Dibutylzinnoxid. Denkbar sind auch Katalysatoren, die auf anderen Metallen wie z. B. Zink oder Antimon basieren, sowie metallfreie Veresterungskatalysatoren. Weiterhin sind weitere Additive und Fahrhilfsmittel wie Antioxidantien oder Farbstabilisatoren möglich.

Die Klebstoffe können sowohl aus nur einem als auch mehreren unterschiedlichen Polyolen bestehen, bevorzugt wird der Klebstoff durch die Verwendung von mehreren Polyether- oder/und Polyester-Polyolen formuliert.

Neben den Polymeren, bevorzugt Polyester-Polyolen, können die Klebstoffe weitere für Klebstoffformulierungen übliche Hilfsstoffe aufweisen, wie z.B. nicht OH-funktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze sowie Alterungsschutz- und Hilfsmittel. Der Anteil an Hilfsstoffen an den Klebstoffen kann bis zu 50 Gew.-%, vorzugsweise von 0,1 bis 25 Gew.-% bezogen auf die Gesamtklebstoffformulierung betragen.

Vorzugsweise sind die vernetzen Polymere über Urethanbrücken bzw. -bindungen oder entsprechende Brücken aufweisende Molekülketten und nicht über -O-CH₂-CH(OH)-CH₂-O-Brücken oder entsprechende Brücken aufweisende Molekülketten vernetzt. Besonders bevorzugt basieren die vernetzten Polymere auf Polyether- und/oder Polyester-Polyolen, bevorzugt zumindest zum Teil auf amorphen Polyester-Polyolen, und sind über Urethanbrücken bzw. -bindungen oder entsprechende Brücken aufweisende Molekülketten vernetzt.

Die Vernetzung durch die Einheit -O-CH₂-CH(OH)-CH₂-O- aufweisende Brücken oder entsprechende Brücken aufweisende Molekülketten kann z.B. dadurch erfolgen, dass Glycidylether-Gruppen haltige Verbindungen eingesetzt werden. Solche Verbindungen können z.B. durch Reaktion einer OH-Gruppe mit Epichlorhydrin erhalten werden.

Die Urethanbrücken bzw. -bindungen oder entsprechende Brücken bzw. Bindungen aufweisende Molekülketten können z.B. durch Einsatz von Isocyanatverbindungen erhalten werden. Geeignete Isocyanatverbindung sind vorzugsweise 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat oder Mischungen daraus, bevorzugt 4,4'-Diphenylmethandiisocyanat oder eine Mischung aus 4,4'-Diphenylmethandiisocyanat und 2,4'-Diphenylmethandiisocyanat.

Beim erfindungsgemäßen in Kontakt bringen der Verklebung mit dem überkritischen Fluid wird der Klebstoff der Verklebung bzw. die Verklebung vorzugsweise mit dem überkritischen Fluid beladen.

Das in Kontakt bringen der Verklebung mit dem überkritischen Fluid erfolgt vorzugsweise für einen Zeitraum von 1 Minute bis 48 Stunden, bevorzugt 10 Minuten bis 24 Stunden und besonders bevorzugt 2 bis 22 Stunden. Durch einen längeren Zeitraum des Inkontaktbringens mit dem überkritischen Fluid kann die Reduktion der Zugscherkräfte erhöht werden.

In dem erfindungsgemäßen Verfahren erfolgt die Änderung einer der Parameter Druck, Volumen, Stoffmenge oder Temperatur, so dass das Fluid vom überkritischen Zustand in einen anderen Zustand übergeht, vorzugsweise innerhalb eines Zeitraums von kleiner 15 Sekunden, bevorzugt von kleiner-gleich 10 Sekunden.

Das erfindungsgemäße Verfahren kann zur Reduktion der Zugscherkräfte der Verklebung um vorzugsweise mindestens 50 %, bevorzugt mindestens 80 %, verwendet werden.

Es kann vorteilhaft sein, wenn sich unter Anwendung des erfindungsgemäßen Verfahrens die Verklebung von mindestens einem der verklebten Bauteile vollständig ablöst. Auch kann es vorteilhaft sein, wenn die Verklebung so instabil wird, dass sich die Bauteile ohne Einwirkung von Kräften lösen lassen. Dabei kann sich die Verklebung von mindestens einem der verklebten Bauteile vollständig ablösen oder aber die Verklebung selbst auseinanderfallen.

Vorzugsweise wird deshalb das erfindungsgemäße Verfahren als zumindest ein Teilschritt in einem Verfahren zur Lösung von Verklebungen von Bauteilen eingesetzt.

Die Oberflächen der verklebten Bauteile oder die verklebten Bauteile selbst können die gleichen Materialien aufweisen oder aus diesen bestehen. Die Oberflächen der verklebten Bauteile oder die verklebten Bauteile selbst können aber auch verschiedene Materialien aufweisen oder aus diesen bestehen. Bevorzugt sind die Materialien ausgewählt aus Metall, Kunststoff oder Holz. Vorzugsweise weist mindestens ein verklebtes Bauteil oder die Oberfläche davon ein Metall auf oder besteht daraus.

Auch ohne weitere Ausführungen wird davon ausgegangen, dass ein Fachmann die obige Beschreibung im weitesten Umfang nutzen kann. Der Gegenstand der vorliegenden Erfindung wird an Hand der nachfolgenden Beispiele näher erläutert, ohne dass der Gegenstand der vorliegenden Erfindung darauf beschränkt sein soll.

### Beispiele:

### Messmethoden:

### 1. Bestimmung der thermischen Eigenschaften:

Die Bestimmung der thermischen Eigenschaften der im Rahmen der vorliegenden Erfindung eingesetzten Polymere erfolgt durch Dynamische Differenzkalorimetrie (DSC) in Anlehnung an die DSC-Methode DIN 53765. Es werden die Werte des zweiten Heizintervalls angegeben, die Heizrate betrug 10 K/min.

### 2. Zugscherfestigkeiten

Die Klebeigenschaften der im Rahmen der vorliegenden Erfindung eingesetzten Klebstoffe/Klebstoff-Formulierungen wurden anhand der Zugscherfestigkeit nach DIN EN 1465 in N/mm² bestimmt.

### 3. OHZ

Die eingesetzten Polymere besitzen oft Hydroxylgruppen als Endgruppen. Die Konzentration der OH-Gruppen wird nach DIN 53240-2 titrimetrisch in mgKOH / g Polymer bestimmt.

### 4. NCO-Zahl

Die NCO-Zahl wurde in Anlehnung an die DIN EN 1242 titrimetrisch in Gew-% ermittelt.

### 5. Gelpermeationschromatographie

Das zahlenmittlere und das gewichtsmittlere Molekulargewicht (Mn bzw. Mw) der im Rahmen der vorliegenden Erfindung eingesetzten Polymere wird nach DIN 55672-1 mittels Gelpermeationschromatographie in Tetrahydrofuran als Eluent und Polystyrol zur Kalibrierung bestimmt.

### Eingesetzte Stoffe:

Es wurden die in Tabelle 1 angegebenen Stoffe eingesetzt:

**Tabelle 1: Eingesetzte Rohstoffe**

| | |
|---|---|
| P1 | DYNACOLL® 7150: Hydroxyterminierter Polyester (Fa. Evonik Resource Efficiency GmbH) mit OHZ 43, *T*_{g} = 50 °C |
| P2 | DYNACOLL® 7250: Hydroxyterminierter Polyester (Fa. Evonik Resource Efficiency GmbH) OHZ21, *T*_{g} = - 50 °C |
| P3 | DYNACOLL® 7360: Hydroxyterminierter Polyester (Fa. Evonik Resource Efficiency GmbH) mit OHZ 30, *T*_{g} = -60 °C, *T*ₘ = 55 |
| P4 | DYNACOLL® 7380: Hydroxyterminierter Polyester (Fa. Evonik Resource Efficiency GmbH) mit OHZ 30, *T*ₘ = 70 °C |
| P5 | DYNACOLL® EP 413.10: Hydroxyterminierter Polyester (Fa. Evonik Resource Efficiency GmbH) mit OHZ 20, *T*_{g} = 30 °C |
| P6 | DYNACOLL® EP 415.10: Hydroxyterminierter Polyester (Fa. Evonik Resource Efficiency GmbH) mit OHZ 20, *T*_{g} = 50 °C |
| P7 | PPG 2000: Hydroxyterminierter Polypropylenglykol (Fa. DOW) mit Mn = 2 kDa |
| P8 | DYNACOLL® AC 1630: Polyacrylat mit *T*_{g} = 63 °C, Mw = 60 kDa, OHZ = 0 |
| OK1 | VESTOPLAST® 206: Silanmodifiziertes Polyolefin (Fa. Evonik Resource Efficiency GmbH) |
| EK1 | 2-Komponenten Epoxy-Kraftkleber (Do-it-yourself) der Firma Fischer; bestehend u.a. aus Bisphenol-A-Epichlorhydrinharz mit Mn 700 g/mol |
| EK2 | 2-Komponenten Epoxy-Kleber (Do-it-yourself) der Firma Uhu; bestehend aus Epoxydharz, Polyamid Harz, Polyethylenpolyamine und Tetrathylenpentamin |

### Herstellung von eingesetzten PU-Hotmelt-Formulierungen:

Zur Herstellung der eingesetzten PU-Hotmelt Formulierungen wurden in einem 500 ml Planschliffkolben 300 g der in Tabelle 2 angegebenen Polyol-Mischungen bei 130 °C aufgeschmolzen und für 45 Minuten im Vakuum getrocknet. Danach wurde die in Tabelle 2 angegebene Menge 4,4'-Diphenylmethandiisocyanat (Desmodur® 44M - Fa. Covestro) in einem molaren OH/NCO-Verhältnis von 1:2,2 zugegeben und zügig homogenisiert. Zur vollständigen Umsetzung der Reaktionspartner wurde 45 Minuten bei 130 °C unter Schutzgasatmosphäre gerührt. Anschließend wurde der feuchtigkeitshärtende Schmelzklebstoff abgefüllt.

Die Aushärtung der Klebstoffe zur Herstellung von Filmen oder Klebverbindungen erfolgte durch 2 Wochen Lagerung bei 20 °C und 65 % rel. Luftfeuchtigkeit.

**Tabelle 2: Zusammensetzung der eingesetzten PU-Hotmelt Formulierungen**

| Formulierung | Zusammensetzung Polyole (Gew-%) | Einwaage Desmodur® 44M |
|---|---|---|
| PU1 | P1 (57,5 Gew-%)/P2 (28,8 Gew-%) | 13,7 Gew-% |
| PU2 | P2 (90,5 Gew-%) | 9,5 Gew-% |
| PU3 | P5 (61,3 Gew-%)/P2 (30,6 Gew-%) | 8,1 Gew-% |
| PU4 | P6 (61,5 Gew-%)/P2 (30,7 Gew-%) | 7,8 Gew-% |
| PU5 | P3 (88,0 g Gew-%) | 12,0 Gew-% |
| PU6 | P4 (87,6 Gew-%) | 12,4 Gew-% |
| PU7 | P3 (44,8 Gew-%)/P7 (24,5 Gew-%)/P8 (18,7 Gew-%) | 12,0 Gew-% |

### Herstellung eines Silan-terminierten Polymer STP1:

In einem 500 ml Planschliffkolben wurden ca. 300g Polyol P2 bei 130 °C für 45 Minuten im Vakuum (< 10 mbar) getrocknet. Danach wurde die Schmelze auf 80 °C abgekühlt und 0,03 g DBTL sowie 29 g 3-Isocyanatopropyltrimethoxysilan (VESTANAT® EP-IPMS - Fa. Evonik Resource Efficiency GmbH) in einem molaren OH/NCO-Verhältnis von 1:1 zugegeben und für 45 Minuten bei 80 °C unter Stickstoff homogenisiert. Anschließend wurden 0,15 g DBTL als Aushärtungskatalysator zugegeben und direkt abgefüllt.

Die Aushärtung der Klebstoffe zur Herstellung von Filmen oder Klebverbindungen erfolgte durch 2 Wochen Lagerung bei 20 °C und 65 % rel. Luftfeuchtigkeit.

### Herstellung von Epoxy-Klebstoff-Formulierungen EK1 & EK2

Die Herstellung der 2-Komponenten Epoxy-Klebstoffe erfolgte gemäß der Gebrauchsanweisung des Herstellers.

### Behandlung von Verklebungen mit überkritischem Fluid

Die zu untersuchenden Verklebungen/Probekörper (Klebstofffilme oder verklebte Substrate) wurden in einem 1L-Stahlreaktor mit 100 bar CO₂ bei einer Temperatur von 50 °C behandelt (beladen) und die Bedingungen für 20 Stunden gehalten. Anschließend wurde der Reaktor innerhalb von 10 Sekunden auf Normaldruck entspannt und die Probekörper zur weiteren Analyse entnommen.

### Bewertung der Expansion der ausgehärteten Klebstofffilme:

Zur Bewertung, ob die eingesetzten Klebstofffilme durch die beschriebene Beladung mit überkritischem CO₂ und anschließende Entspannung in der Verklebung eine Verminderung der Klebkraft bewirken könnte, wurden Filme von ausgehärteten Klebstoffen mit der Abmessung 3 x 3 cm zugeschnitten und die Expansion per Abmessung bewertet. Die Schichtdicke der Filme vor der Expansion betrug 1,2 mm.

Die Bewertung zum Grad der Expansion erfolgt dabei in folgenden Skalen: 0 (Expansion <10%) / + (Expansion 10-50%) / ++ (Expansion >50%). Die Ergebnisse sind in Tabelle 3 wiedergegeben.

**Tabelle 3:**

| Formulierung | Grad der Expansion |
|---|---|
| PU1 | + |
| PU2 | ++ |
| PU3 | ++ |
| PU4 | ++ |
| PU5 | 0 |
| PU6 | 0 |
| PU7 | ++ |
| STP 1 | 0 |
| OK1 | 0 |
| EK1 | 0 |

Die Versuche PU1 bis PU7 zeigen, dass Polyurethanfilme basierend auf Polyester-Polyolen unter den gegebenen Bedingungen besondere gut expandierbar sind, wenn hohe Anteile an amorphen Polyolen im Klebstoff vorhanden sind. Klebstoffsysteme basierend auf reinen kristallinen Polyolen (PU5 und PU6) zeigten keine großen Expansionen, allerdings wies PU7 mit einem hohen Gehalt des kristallinen Polyols eine sehr gute Expansion auf. Weiterhin scheinen Verklebungen auf Basis von Polyester-Polyolen mit niedriger OHZ bessere Expansionseigenschaften aufzuweisen.

Reaktive Klebstoffe, welche keine Polyurethanklebstoffe sind, hatten bei den Untersuchungen keinen signifikanten Effekt, dies gilt sowohl für das Silan-funktionalisierte Polyolefin OK1, das Silanterminierte Polyol STP1 sowie die 2-Komponenten Epoxidklebstoffe EK1 und EK2.

Für die Formulierung PU3 wurden die Zugscherfestigkeit von Verklebungen unterschiedlicher Materialien vor und nach der Behandlung durch sCO₂ bestimmt. Die Ergebnisse sind in Tabelle 4 dargestellt.

**Tabelle 4:**

| Formulierung | Substrat 1 | Substrat 2 | ZSF vor sCO2 | ZSF nach sCO2 | Abfall ZSF In % |
|---|---|---|---|---|---|
| PU3 | Stahl | Stahl | 1,2 / a | 0,1 / a | > 90 % |
| PU3 | Stahl | PET-Folie | 0,7 / a | 0,3 / a | > 50 % |

| | | | | | |
|---|---|---|---|---|---|
| a = Adhäsionsbruch | | | | | |

Aus Tabelle 4 kann deutlich entnommen werden, dass insbesondere bei Metallverklebungen die Klebkraft in Form der Zugscherfestigkeit sehr stark reduziert wurde.

## Patentansprüche

1. Verfahren bei dem eine Verklebung mit einem überkritischen Fluid in Kontakt gebracht wird, **dadurch gekennzeichnet, dass** die Verklebung auf einem oder mehreren Klebstoffen basiert, die vernetzte Polymere aufweisen, wobei die vernetzten Polymere mindestens ein Sauerstoffatom in der Polymerkette aufweisen, und die vernetzen Polymere über Urethanbrücken oder -O-CH₂-CH(OH)-CH₂-O- Brücken oder entsprechende Brücken aufweisende Molekülketten vernetzt sind, und dass nach dem in Kontakt bringen der Verklebung mit dem überkritischen Fluid mindestens einer der Parameter Druck, Volumen, Stoffmenge oder Temperatur so geändert wird, dass das Fluid vom überkritischen Zustand in einen anderen Zustand übergeht.

2. Verfahren gemäß Anspruch 1, **dadurch gekennzeichnet, dass** das überkritische Fluid überkritisches Kohlendioxid ist.

3. Verfahren gemäß Anspruch 1 oder 2, **dadurch gekennzeichnet, dass** die vernetzten Polymere auf Polyether- und/oder Polyester-Polyolen, bevorzugt Polyester-Polyolen basieren.

4. Verfahren nach mindestens einem der Ansprüche 1 bis 3, **dadurch gekennzeichnet, dass** die vernetzen Polymere über Urethanbrücken oder entsprechende Brücken aufweisende Molekülketten und nicht über -O-CH₂-CH(OH)-CH₂-O-Brücken oder entsprechende Brücken aufweisende Molekülketten vernetzt sind.

5. Verfahren nach mindestens einem der Ansprüche 1 bis 4, **dadurch gekennzeichnet, dass** das Fluid vom überkritischen Zustand in den gasförmigen Zustand übergeht.

6. Verfahren nach mindestens einem der Ansprüche 1 bis 5, **dadurch gekennzeichnet, dass** beim in Kontakt bringen der Verklebung mit dem überkritischen Fluid der Klebstoff der Verklebung mit dem überkritischen Fluid beladen wird.

7. Verfahren nach mindestens einem der Ansprüche 1 bis 6, **dadurch gekennzeichnet, dass** das in Kontakt bringen der Verklebung mit dem überkritischen Fluid für einen Zeitraum von 1 Minute bis 48 Stunden, bevorzugt 10 Minuten bis 24 Stunden erfolgt.

8. Verfahren nach mindestens einem der Ansprüche 1 bis 7, **dadurch gekennzeichnet, dass** die Änderung einer der Parameter Druck, Volumen, Stoffmenge oder Temperatur, so dass das Fluid vom überkritischen Zustand in einen anderen Zustand übergeht, innerhalb eines Zeitraums von kleiner 15 Sekunden, bevorzugt von kleiner-gleich 10 Sekunden erfolgt.

9. Verfahren nach zumindest einem der Ansprüche 1 bis 8, **dadurch gekennzeichnet, dass** es zur Reduktion der Zugscherkräfte der Verklebung, vorzugsweise um mindestens 50 %, verwendet wird.

10. Verfahren nach mindestens einem der Ansprüche 1 bis 9, **dadurch gekennzeichnet, dass** die Verklebung von mindestens einem der verklebten Bauteile vollständig ablöst.

11. Verfahren nach einem der Ansprüche 1 bis 10, **dadurch gekennzeichnet, dass** es als zumindest ein Teilschritt in einem Verfahren zur Lösung von Verklebungen von Bauteilen eingesetzt wird.

12. Verfahren nach Anspruch 10 oder 11, **dadurch gekennzeichnet, dass** die Oberflächen der verklebten Bauteile die gleichen Materialien aufweisen oder aus diesen bestehen.

13. Verfahren nach Anspruch 10 oder 11, **dadurch gekennzeichnet, dass** die Oberflächen der verklebten Bauteile verschiedene Materialien aufweisen oder aus diesen bestehen.

14. Verfahren nach einem der Ansprüche 12 oder 13, **dadurch gekennzeichnet, dass** die Materialien ausgewählt sind aus Metall, Kunststoff oder Holz

15. Verfahren nach mindestens einem der Ansprüche 10 bis 14, **dadurch gekennzeichnet, dass** mindestens ein verklebtes Bauteil oder die Oberfläche davon ein Metall aufweist oder daraus besteht.
